# EUROPÄISCHE PATENTSCHRIFT

(11) **EP 0 546 268 B1**
(45) Veröffentlichungstag und Bekanntmachung des Hinweises auf die Patenterteilung: **21.05.1997**
(21) Anmeldenummer: 92116744.1
(22) Anmeldetag: 30.09.1992
(51) Int. Cl.: C02F 1/72, C02F 1/78, C02F 1/32, C02F 1/04

(54) **Verfahren zum Reinigen eines durch organische Inhaltsstoffe belasteten wässrigen Fluids**
Purification process for aqueous fluids containing organic compounds
Procédé pour la purification des fluides aqueux contenant des composés organiques et inorganiques

(30) Priorität: 01.10.1991 DE 4132672
(43) Veröffentlichungstag der Anmeldung: 16.06.1993
(73) Patentinhaber: L. & C. Steinmüller GmbH, D-51641 Gummersbach (DE)
(72) Erfinder: Schulte, Reinhard, W-5270 Gummersbach (DE); Jaradi, Hussein, W-5415 Nauort (DE)
(74) Vertreter: Carstens, Wilhelm, Dipl.-Phys.

(56) Entgegenhaltungen:
- US-A- 4 012 321
- US-A- 4 296 328
- US-A- 4 735 728
- PATENT ABSTRACTS OF JAPAN vol. 14, no. 254 (C-724)31. Mai 1990
- DATABASE WPI Section Ch, Week 7814, Derwent Publications Ltd., London, GB; Class D15, AN 78-25942A

## Beschreibung

Die Erfindung betrifft ein Verfahren zum Reinigen einer mindestens durch organische Inhaltsstoffe belasteten wäßrigen Flüssigkeit, bei dem die Flüssigkeit kontinuierlich zumindest einer Verdampfung unter Bildung eines Konzentrats und eines Kondensats unterzogen wird, von denen eines einer Bestrahlung mit UV-Licht unterzogen wird.

Aus der US-A- 4,012,321 ist ein solches Verfahren bekannt, bei dem die zu reinigende Flüssigkeit vor der Verdampfung einer Naßoxidation und einer Feststoffentfernung unterzogen wird. Die Verdampfung wird so geführt, daß als Kondensat Frischwasser abgeführt werden kann. Das Konzentrat, das die organischen Inhaltsstoffe enthält, wird nach Zufuhr einer fünfzigprozentigen H₂O₂-Lösung in einer Photolysekammer einer UV-Bestrahlung unterzogen.

Bei der US-A- 4012321 wird eine Flüssigkeit behandelt, die im wesentlichen nur mit organischen Inhaltsstoffen belastet ist und nur eine geringe anorganische Belastung aufweist. Weiterhin geht das bekannte Verfahren davon aus, daß durch die Schritte Naßoxidation, Feststoffentfernung und Verdampfung bereits ein Kondensat erreicht wird, das frei von organischen Inhaltsstoffen ist. Etwaig vorhandene Salze werden bei dieser Verdampfungsführung in das Konzentrat eingetragen, wodurch der Wirkungsgrad der Photolyse erheblich beeinträchtigt wird.

Es ist die Aufgabe der vorliegenden Erfindung, ein Verfahren der vorstehend genannten Art anzugeben, das bei einer zusätzlichen Belastung mit einem relativ großen Gehalt an unerwünschten Feststoffen und ggf. anorganischen Inhaltsstoffen (gelöste Ionen) zum Betrieb der Bestrahlungsstufe mit größerem Wirkungsgrad führt.

Diese Aufgabe wird dadurch gelöst, daß das Kondensat der Bestrahlung mit UV-Licht unterzogen wird und der pH-Wert der Flüssigkeit direkt vor der Verdampfung durch einen Regelkreis auf einen solchen Wert eingestellt wird, daß der pH-Wert des Kondensats im Bereich von 4-8, vorzugsweise 4,5-7, liegt, und das Konzentrat, das die abgeschiedenen Feststoffe enthält, abgeführt wird, z.B. deponiert oder sonstwie verarbeitet wird.

Bei der erfindungsgemäßen Verfahrensführung wird durch die Einstellung des pH-Wertes der Flüssigkeit vor dem Verdampfer in Abhängigkeit von dem pH-Wert des Kondensats erreicht, daß im Kondensat im wesentlichen die organischen Inhaltsstoffe enthalten sind, die zerstört werden sollen, während im Konzentrat die Feststoffe bzw. Salze verbleiben, die den Wirkungsgrad der UV-Bestrahlungsstufe behindern könnten. Da eine Fällung und Sedimentation vor Eindampfung unterbleiben, erfolgt keine starke Erhöhung der abzuscheidenden Feststoffmenge.

Eine Flockung/Fällung mit angeschlossener Sedimentation vor der Eindampfung zur Abtrennung und Reduzierung von in der Flüssigkeit enthaltenen Salzen und Feststoffen würde jedoch bei einem hohen Gehalt an gelösten Ionen, die eine hohe Löslichkeit aufweisen können, dazu führen, daß diese Ionen häufig nur durch Verschiebung des Lösungsgleichgewichtes aus der Flüssigkeit entfernt werden könnten. Zu diesem Zwecke müßte eine unverhältnismäßig hohe Menge an Zusatzstoffen, wie Säuren oder Alkalisierungsmitteln zugeführt werden. Durch diese Zugabe von Hilfsmitteln aber würde die aus der Flüssigkeit zu entfernende Feststoffmenge stark erhöht, wodurch zwangsläufig die Probleme und die hiermit verbundenen Kosten für eine Reststoffentsorgung, wie Deponierung, ansteigen würden.

Falls durch die UV-Bestrahlung in dem Kondensat selbst nicht eine ausreichende Reinigung erzielt wird, ist es vorteilhaft, wenn vor der UV-Bestrahlung ein Oxidationshilfsmittel, vorzugsweise O₃ und H₂O₂ zugesetzt, wird.

Es kann vorteilhaft sein, wenn vor der pH-Wert-Einstellung eine Naßoxidation mit einem Oxidationshilfsmittel, vorzugweise O₃ oder H₂O₂, erfolgt.

Um auf eine gesonderte Feststoffabscheidung vor Verdampfung verzichten zu können, wird vorzugsweise die Verdampfung so geführt, daß in der Flüssigkeit bereits enthaltene Feststoffe bei der Verdampfung mit abgeschieden werden. Hierzu bietet sich insbesondere die Dünnschichtverdampfung ohne gesonderte Kristallisationsstufe an.

Falls erforderlich, kann das Kondensat nach der UV-Bestrahlung noch über eine Aktivkohle-Stufe geführt werden und/oder noch einer weiteren Behandlungsstufe ausgewählt aus der Gruppe: aerobe oder anaerobe Biologie, Strippung, Magnesiumammoniumphosphat-Fällung oder einer Kombination der vorgenannten Verfahrensstufen unterzogen werden.

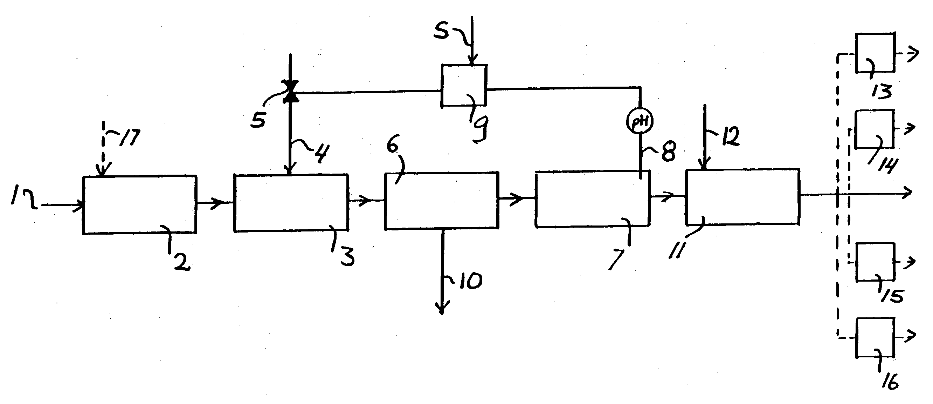

Eine bevorzugte Führung des erfindungsgemäßen Verfahrens soll nun anhand der beigefügten Figur näher erläutert werden. Die Figur zeigt:
ein Blockschaltbild der Verfahrensführung.

Deponiesickerwasser 1 mit einem vorzugsweisen pH-Wert von 6,5-9 wird aus einer Vorlage 2 einem Behälter 3 zur pH-Wert-Einstellung zugeführt, in dem ein Mischwerkzeug angeordnet sein kann. Dem Behälter 3 ist eine Einrichtung 4 zur Zugabe von Säure zugeordnet, die ein ansteuerbares Ventil 5 aufweist.

Nach Einstellung des pH-Wertes auf einen Wert im sauren Bereich, vorzugsweise auf den Wert 5,5, wird die wäßrige Flüssigkeit einem Dünnschichtverdampfer 6 zugeführt. Die Verdampfungsbrüden werden einem Kondensator 7 zugeleitet. Mittels einer pH-Wert-Meßeinrichtung 8 wird der pH-Wert des Kondensats im Kondensator erfaßt und einer Steuereinheit 9 zugeführt, in dem er mit einem Sollwert S verglichen wird. In Abhängigkeit von dem Vergleich steuert die Steuereinheit 9 das Ventil 5 so an, daß sich der gewünschte pH-Wert im Kondensat des Kondensators 7 einstellt. Der pH-Wert des Kondensats soll im Bereich von 4-8, vorzugsweise im Bereich von 4,5-7, weiter bevorzugt im Bereich von 5,5-7, liegen. Durch die Einstellung des pH-Wertes in diesem Bereich wird erreicht, daß die Verdampfung im Verdampfer 6 so geführt wird, daß die Salze im wesentlichen im Konzentrataustrag 10 des Verdampfers verbleiben.

Das Kondensat wird einer Photolysekammer 11 zugeführt, in der eine Bestrahlung des Kondensats mit UV-Licht stattfindet. Der Photolysekammer 11 wird, wie bei 12 schematisch dargestellt, eine Wasserstoffperoxidlösung oder gasförmiges O₃ zugeführt.

Da die unerwünschten Feststoffe und anorganischen Bestandteile im Konzentrat 10 verbleiben und nicht im der UV-Bestrahlung zugeführten Kondensat, steht das UV-Licht direkt zur Zerstörung organischer Inhaltsstoffe und bei Vorhandensein von Oxidationsmitteln, wie H₂O₂ oder O₃, zur Erzeugung der gewünschten Radikale zur Verfügung und wird nicht ohne nennenswerten Beitrag zur Photolyse oder Radikal-Erzeugung von den unerwünschten Inhaltsstoffen absorbiert.

Durch die pH-Wert-Regulierung vor der Verdampfung kann eingestellt werden, welche Bestandteile im Kondensat und welche Inhaltsstoffe im Konzentrat vorhanden sind.

In der FIG. ist schematisch dargestellt, daß die wässrige Phase, die die Photolysekammer 11 verläßt, noch einer Aktivkohlefiltration 13, einer aeroben oder anaeroben biologischen Behandlung 14, einer Strippung 15 oder einer MAP-Fällung 16 unterzogen werden kann, ehe sie einem Vorfluter oder einem anderen Einsatzzweck zugeführt wird.

Bei einer weiteren Ausführungsform kann, wie bei 17 schematisch angedeutet, der zu behandelnden Flüssigkeit ein Oxidationsmittel, vorzugsweise H₂O₂ oder O₃, zugeführt werden, um vor der pH-Wert-Einstellung im Behälter 3 eine Naßoxidation zu bewirken.

## Patentansprüche

1. Verfahren zum Reinigen einer mindestens durch organische Inhaltsstoffe belasteten wäßrigen Flüssigkeit, bei dem die wäßrige Flüssigkeit kontinuierlich zumindest einer Verdampfung unter Bildung eines Konzentrats und eines Kondensats unterzogen wird, von denen eines einer Bestrahlung mit UV-Licht unterzogen wird,
**dadurch gekennzeichnet**, daß
das Kondensat der Bestrahlung mit UV-Licht unterzogen wird und der pH-Wert der wäßrigen Flüssigkeit direkt vor der Verdampfung durch einen Regelkreis auf einen solchen Wert eingestellt wird, daß der pH-Wert des Kondensats im Bereich von 4-8 liegt, und das Konzentrat, das die abgeschiedenen Feststoffe enthält, abgeführt wird.

2. Verfahren nach Anspruch 1,
**dadurch gekennzeichnet**, daß
vor der UV-Bestrahlung ein Oxidationshilfsmittel zugesetzt wird.

3. Verfahren nach Anspruch 1 oder 2,
**dadurch gekennzeichnet**, daß
vor der pH-Wert-Einstellung eine Naßoxidation mit einem Oxidationshilfsmittel erfolgt.

4. Verfahren nach mindestens einem der Ansprüche 1 bis 3,
**dadurch gekennzeichnet**, daß
der pH-Wert des Kondensats im Bereich von 4,5 - 7 liegt.

5. Verfahren nach mindestens einem der Ansprüche 1 bis 4,
**dadurch gekennzeichnet**, daß
das Kondensat nach der UV-Bestrahlung noch über eine Aktivkohle-Stufe geführt wird.

## Claims

1. Process for cleaning of an aqueous liquid at least charged with organic matter, with which the aqueous liquid is continuously at least subjected to an evaporation while producing a concentrate and a condensate, one of which is subjected to an irradiation with UV-light,
characterized in that the condensate is subjected to the irradiation with UV-light and in that the pH-value of the aqueous liquid is adjusted directly before the evaporation by a control circuit to such a value that the pH-value of the condensate lies in the range of 4-8 and the concentrate containing the separated solids is carried away.

2. Process according to claim 1,
characterized in that before the UV-irradiation an oxidation aid is added.

3. Process according to claim 1 or 2,
characterized in that before adjusting the pH-value a wet oxidation with an oxidation aid is performed.

4. Process according to at least one of the claims 1 - 3,
characterized in that the pH-value of the condensate lies in the range of 4, 5-7.

5. Process according to at least one of the claims 1 - 4,
characterized in that the condensate is further led over an active carbon stage after the UV-irradiation.

## Revendications

1. Procédé pour le nettoyage d'un liquide aqueux chargé d'une substance organique dans lequel le liquide aqueux est soumis de façon continue à au moins une évaporation pendant laquelle se forme un concentré et un produit de condensation dont l'un est soumis à une irradiation par lumière UV, caractérisé en ce que le produit de condensation est soumis à l'irradiation par lumière UV et que la valeur pH du liquide aqueux est réglée directement, avant l'évaporation, par l'intermédiaire d'un circuit de régulation à une telle valeur que la valeur pH du produit de condensation se trouve dans la plage de 4 à 8 et en ce que le concentré qui contient des matières solides déposées, est évacué.

2. Procédé selon la revendication 1, caractérisé en ce qu'avant l'irradiation UV, un agent auxiliaire d'oxydation est ajouté.

3. Procédé selon la revendication 1 ou 2, caractérisé en ce qu'avant la régulation de la valeur pH une oxydation par voie humide s'effectue au moyen d'un agent auxiliaire d'oxydation.

4. Procédé selon au moins une des revendications 1 à 3 caractérisé en ce que la valeur pH du produit de condensation se trouve dans la plage de 4,5 à 7.

5. Procédé selon au moins une des revendications 1 à 4, caractérisé en ce qu'après l'irradiation UV, le produit de condensation est en plus guidé à travers un étage à charbon actif.
